# FASCICULE DE BREVET EUROPEEN

(11) **EP 3 233 632 B1**
(45) Date de publication et mention de la délivrance du brevet: **27.06.2018**
(21) Numéro de dépôt: 15816171.1
(22) Date de dépôt: 18.12.2015
(51) Int. Cl.: B64C 39/02, B64D 5/00

(54) **DRONE ET ÉQUIPEMENT D'INTERVENTION AÉROPORTÉE ASSOCIÉ**
DROHNE SOWIE LUFTGESTÜTZTES ABSETZSYSTEM
DRONE AND ASSOCIATED AERIAL DEPLOYMENT EQUIPMENT

(30) Priorité: 19.12.2014 FR 1462921
(43) Date de publication de la demande: 25.10.2017
(73) Titulaire: DAE, 78230 Le Pecq (FR)
(72) Inventeur: DEMONFORT, Thierry, 78230 Le Pecq (FR)
(74) Mandataire: Alatis
(86) Numéro de dépôt international: PCT/EP2015/080667
(87) Numéro de publication internationale: WO 2016/097375

(56) Documents cités:
- EP-A1- 0 786 403
- WO-A1-2011/002309
- US-A- 3 823 901
- US-B1- 6 315 244

## Description

### DOMAINE TECHNIQUE DE L'INVENTION

La présente invention concerne un drone, notamment un drone aérolargable, et un équipement d'intervention aéroportée incluant un tel drone, ainsi qu'un procédé d'aérolargage. Plus précisément, l'invention est relative à un drone largable à partir d'un aéronef et susceptible de se diriger vers une cible puis de larguer, à son tour, une charge matérielle et/ou un parachutiste.

### ÉTAT DE LA TECHNIQUE ANTÉRIEURE

Les drones sont des aéronefs motorisés, sans opérateur humain ni pilote embarqué, qui décollent généralement à partir d'une piste aménagée située à distance d'une zone difficilement accessible.

Ils comprennent, notamment, un fuselage équipé de moyens de portance (ailes,...), d'au moins un organe de propulsion, d'instruments de navigation, d'électronique embarquée et, le cas échéant, de moyens porteurs d'une charge utile.

Ces drones sont télécommandés depuis le sol, contrôlés depuis des appareils naviguant à haute altitude ou préprogrammés.

Du fait de leur bonne manoeuvrabilité, de leur longue endurance et de leur caractère furtif, ces vecteurs sont largement utilisés par les forces armées ou les forces de sécurité dans des missions de surveillance, de maintien de l'ordre, de renseignement ou de frappes ciblées en écartant ainsi les risques de perte humaine.

En outre, lorsque ces drones sont radio-commandés depuis un centre de contrôle situé à terre ou embarqué dans un aéronef, ils sont facilement détectables et présentent des risques élevés de neutralisation par l'ennemi.

Par ailleurs, la mise en oeuvre de ces drones nécessite des infrastructures au sol (piste de décollage ou rampe de lancement) ou en mer ce qui limite leurs capacités opérationnelles et, notamment, leur réactivité et accroît leur vulnérabilité.

Les aéronefs de transport tactique permettent de réaliser des activités d'aérolargage en respectant des conditions de discrétion et de protection qui ne permettent pas l'infiltration de systèmes aéroportés sur une longue distance et notamment la pénétration d'un espace aérien contrôlé par une zone hostile.

Dans le document US 6 082 675 est décrit un drone aérolargable depuis un aéronef, et lui-même porteur d'une charge, en l'occurrence une bouée acoustique. Le drone est fixé sous le fuselage de l'aéronef porteur, et la bouée acoustique est fixée elle-même sous le fuselage du drone. Après son largage, le drone est piloté à distance par satellite de façon furtive dans un milieu éventuellement hostile, jusqu'à une zone cible où il parachute la bouée acoustique qui amerrit de façon classique. Mais ce drone n'est pas adapté au transport d'une personne.

Dans le document WO 2011/002309 est décrit un aéronef aérolargable à partir d'un autre avion de transport, et prévu pour accueillir un occupant unique en position couchée sur le ventre. Ce document évoque également la possibilité pour le parachutiste d'abandonner l'aéronef en vol. Mais les conditions de cet abandon ne sont pas précisées et paraissent particulièrement dangereuses, notamment parce que le parachutiste, en quittant l'aéronef, est exposé à un risque important d'interférence avec la queue ou les moteurs de l'aéronef.

Par conséquent, aucun dispositif ne permet aujourd'hui de réaliser des activités d'aérolargage conduisant à l'infiltration furtive sur longue distance dans des espaces aériens hostiles et contrôlés en vue d'un largage ciblé et discret de personnel.

### EXPOSÉ DE L'INVENTION

La présente invention a pour but de résoudre ces problèmes techniques de manière fiable et performante en proposant un drone susceptible d'acheminer un parachutiste à proximité immédiate d'un théâtre d'opération extérieure, et d'assurer son largage dans des conditions sécurisées.

Ce but est atteint, selon un premier aspect de l'invention, au moyen d'un drone comprenant un fuselage équipé de moyens de portance apte à permettre une position de vol sur le ventre et une position de vol sur le dos, d'au moins un organe de propulsion, d'instruments de navigation autonomes et d'un compartiment axial formant une cavité intégrée dans une partie supérieure du fuselage pour embarquer un parachutiste en position allongée sur le ventre, une avionique pourvue de moyens de pilotage programmables couplés aux instruments de navigation autonomes et des moyens de largage dudit parachutiste commandés par ladite avionique, le drone étant apte et destiné à assurer un largage dudit parachutiste en position de vol sur le dos. En prévoyant que le drone est apte à se retourner sur le dos, et en mesure de permettre le largage du parachutiste en vol sur le dos, on peut conserver une structure de fuselage très simple, sans trappe de largage du parachutiste et sans moyens d'éjection sophistiqués, le largage pouvant s'effectuer par chute libre.

L'avionique comporte des moyens pour commander une procédure de retournement du drone en position de vol sur le dos et de maintien de la position de vol sur le dos jusqu'à achèvement du largage du parachutiste. Le déclenchement de cette procédure peut être automatique, ou effectué à distance. Toutefois, et de façon préférentielle, l'avionique comporte une interface homme-machine de déclenchement pour permettre au parachutiste de déclencher la procédure de retournement. En pratique, l'avionique prévient le parachutiste lorsque les conditions pour déclencher le largage sont remplies et le parachutiste valide le déclenchement. En l'occurrence, ces conditions peuvent par exemple inclure une ou plusieurs des conditions cumulatives suivantes: arrivée dans la zone de largage, à une altitude compatible avec le largage, absence de turbulences, désarrimage préalable du parachutiste. Le cas échéant, le drone comporte des capteurs spécifiques pour vérifier que ces conditions sont remplies, notamment des moyens de détection du désarrimage du parachutiste. Le drone peut également comporter des moyens de détection du largage du parachutiste ou du fait que le parachutiste a quitté le compartiment axial. Le vol sur le dos peut être maintenu jusqu'à confirmation par ces moyens de détection du largage effectif du parachutiste. Alternativement, le vol sur le dos peut être maintenu pour une durée prédéterminée, par exemple 30 secondes, suffisante pour assurer le largage effectif. De préférence, le drone effectue ensuite un retournement sur le ventre pour effectuer un voyage retour vers sa base ou vers le point de chute, d'atterrissage ou d'amerrissage prévu pour la fin de sa mission.

De préférence, le compartiment axial comporte un fond pour accueillir le parachutiste en position allongée sur le ventre et un support rehausseur faisant en saillie par rapport au fond pour assurer un support de la tête et/ou de la partie supérieure du buste du parachutiste en position allongée sur le ventre. Le parachutiste peut ainsi adopter de façon confortable une position dans laquelle ses avant-bras sont ramenés vers l'avant et le haut de son buste est légèrement redressé, ce qui lui permet le cas échéant d'accéder à une interface homme-machine de commande, en pratique un tableau de commande et/ou un joystick, par exemple pour valider certaines opérations pilotées par les moyens de pilotage ou reprendre la main, notamment pour préparer ou lancer les opérations de largage ou pour les manoeuvres d'évitement.

Suivant un mode de réalisation, le drone comporte des sangles ou joncs de maintien du parachutiste en position ventrale allongée dans le compartiment, et des moyens de désarrimage automatique des sangles ou joncs, de préférence lorsque le drone est en position de vol sur le ventre. Ces moyens de désarrimage automatique peuvent notamment comprendre un ou plusieurs couteaux à entraînement pyrotechnique. Ces moyens de désarrimage peuvent notamment être commandés par un système chrono-barométrique ou purement barométrique. On peut également prévoir des moyens de désarrimage manuel rapide, soit en lieu et place des moyens de désarrimage automatique, soit en solution additionnelle de secours.

Suivant un mode de réalisation, l'organe de propulsion comporte deux turboréacteurs situés latéralement à l'extérieur et de part et d'autre d'une portion médiane du fuselage dans laquelle se trouve le compartiment axial, de façon à éviter toute interférence entre les turboréacteurs et le parachutiste lorsque celui-ci quitte en chute libre le compartiment lors du largage sur le dos. Les deux turboréacteurs peuvent être disposé notamment sur, ou de préférence sous des ailes latérales du drone.

Pour les mêmes raisons, le fuselage est de préférence dépourvu de queue faisant saillie de la partie supérieure du fuselage vers le haut, par référence à la position de vol sur le ventre. Alternativement, on peut prévoir deux queues latérales, mais qui doivent dans ce cas être impérativement situées à l'extérieur et de part et d'autre d'une portion médiane du fuselage dans laquelle se trouve le compartiment axial, de façon à éviter toute interférence entre les turboréacteurs et le parachutiste lorsque celui-ci quitte en chute libre le compartiment lors du largage sur le dos.

Suivant un mode de réalisation, le compartiment axial est ouvert. Suivant un mode de réalisation alternatif, le compartiment axial est fermé par un capot largable en position de vol sur le ventre. Le fuselage peut comporter un pare-brise avant. Il peut également être pourvu d'un hublot inférieur pour permettre au parachutiste couché sur le ventre dans le compartiment d'observer le terrain au-dessous de lui lorsque l'avion est en position de vol sur le ventre.

Suivant un mode de réalisation, le drone comporte en outre des moyens porteurs d'une charge utile embarquée, et des moyens de largage de ladite charge utile embarquée commandés par ladite avionique. Ces moyens porteurs de la charge utile embarquée peuvent notamment comprendre une soute obturée en partie basse par au moins un volet mobile permettant un largage de la charge utile embarquée en position de vol sur le ventre, ledit compartiment étant situé au-dessus de ladite soute. Les moyens porteurs de la charge utile embarquée peuvent également être situés, lorsque le drone est en position de vol sur le ventre, dans une partie haute de la cavité intégrée dans une partie supérieure du fuselage pour embarquer ledit parachutiste en position allongée, un volume étant préservé dans la cavité pour loger au moins une portion du corps du parachutiste sous ces moyens porteurs. Il s'agit dans cette hypothèse d'une charge utile qui sera larguée en même temps que le parachutiste, et est de préférence arrimée au parachutiste. Les moyens porteurs permettent alors de soulager le parachutiste de tout ou partie du poids de la charge utile embarquée durant le vol.

Selon d'autres caractéristiques, les moyens de pilotage programmables sont constitués d'une avionique comprenant un calculateur de bord associé à des logiciels et coopérant avec les instruments de navigation autonomes.

De préférence, les instruments de navigation autonomes comprennent des moyens de positionnement satellitaires du type GPS.

Selon encore une autre variante, le fuselage est équipé d'un parachute de récupération pour effectuer la phase finale de son retour à la base et, le cas échéant, de boudins gonflables pour assurer sa flottabilité en cas d'amerrissage.

Suivant un autre aspect de l'invention, celle-ci a trait à un drone, notamment un drone tel que précédemment décrit, aérolargable à partir d'un aéronef de transport, et comprenant des moyens de support du fuselage permettant sa séparation contrôlée depuis l'aéronef dans l'espace aérien, et des moyens d'allumage automatique de l'organe de propulsion lors de la chute gravitationnelle du fuselage.

Selon une variante spécifique, les moyens de support sont aptes à coopérer avec une rampe de translation et de guidage réalisée sur le plancher de l'aéronef de transport et débouchant dans l'espace aérien par son issue arrière.

De préférence, les moyens de support comprennent un train d'atterrissage disposant de roues.

Un autre objet de l'invention est un équipement d'intervention aéroportée comportant un aéronef de transport pourvu d'une issue arrière débouchant dans l'espace aérien et un drone, tel que défini précédemment, muni, notamment, de moyens de support et de moyens porteurs d'un parachutiste, et le cas échéant d'une charge, et susceptible d'être embarqué dans la carlingue de l'aéronef de transport, caractérisé en ce que l'issue arrière est équipée d'une rampe de guidage coopérant avec les moyens de support du drone permettant sa séparation contrôlée depuis l'aéronef dans l'espace aérien et en ce que le drone est pourvu de moyens de largage dudit parachutiste, et le cas échéant de ladite charge. L'aérolargage du drone peut être effectué par gravité ou assisté par des moyens d'éjection, notamment par un parachute éjecteur.

En étant largué depuis un appareil de transport tactique, le drone de l'invention acquiert une grande capacité de projection.

En outre, en raison de son autonomie en vol et de son lancement par aérolargage à haute altitude, le drone de l'invention peut se rapprocher de façon rapide, précise et discrète de zones hostiles et parachuter ainsi un opérateur et/ou du matériel au plus près de l'objectif.

De cette façon, l'aéronef de transport tactique reste éloigné de la zone hostile pour réduire sa vulnérabilité et rendre le largage final le plus discret possible.

Grâce à une interface fuselage - plancher de l'aéronef de transport, l'invention permet d'assurer la phase de translation et de guidage du drone jusqu'à la sortie de l'aéronef sans risque d'interférence.

L'allumage automatique de l'organe de propulsion s'effectue à l'issue de la phase de plané du drone à une altitude précise grâce à l'avionique embarquée qui commande aussi automatiquement la séquence de largage du parachutiste et/ou de la charge utile embarquée.

Par conséquent, le drone de l'invention se trouve ainsi bien adapté à la conduite d'opérations spéciales ou de renseignement.

### BRÈVE DESCRIPTION DES FIGURES

L'invention sera mieux comprise à la lecture de la description qui va suivre, accompagnée des dessins explicités ci-après.
- Les figures 1A à 1D représentent des vues d'ensemble d'un mode de réalisation du drone de l'invention, respectivement, en perspective, de dessus, de face et de côté.
- La figure 2 est une vue schématique des différentes phases d'un exemple du mode d'emploi du drone de l'invention.
- Les figures 3A à 3C illustrent différentes phases de vol d'un drone selon un deuxième mode de réalisation de l'invention.
- La figure 4 illustre l'intérieur d'un compartiment pour loger un occupant du drone selon le deuxième mode de réalisation de l'invention.

Pour plus de clarté, les éléments identiques seront repérés par des signes de référence identiques sur l'ensemble des figures.

### DESCRIPTION DÉTAILLÉE DE MODES DE RÉALISATION

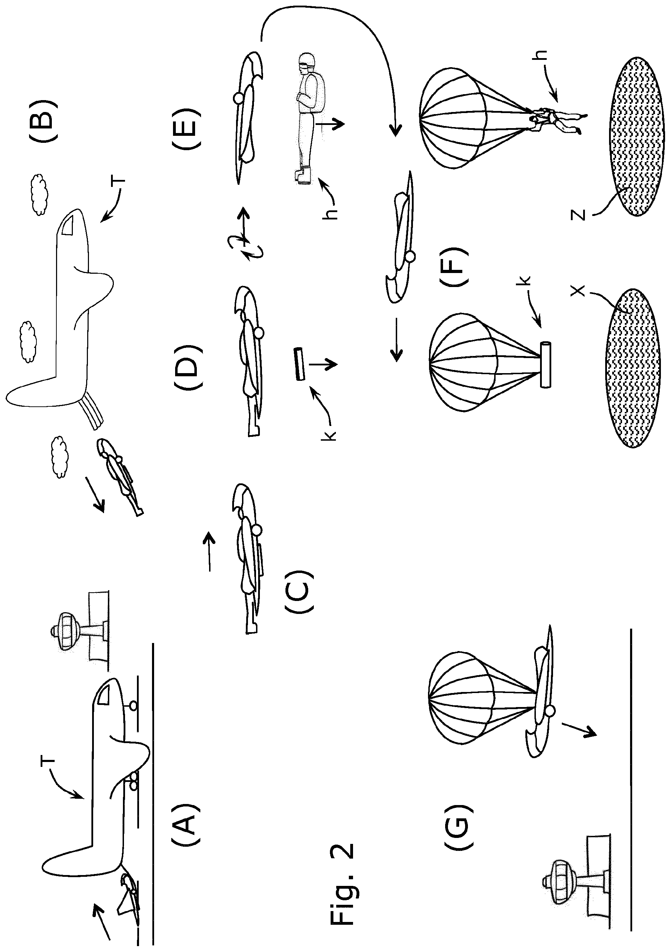

Le drone selon le premier mode de réalisation de l'invention est adapté et destiné à être aérolargué à partir d'un aéronef de transport logistique ou tactique T représenté schématiquement sur la figure 2.

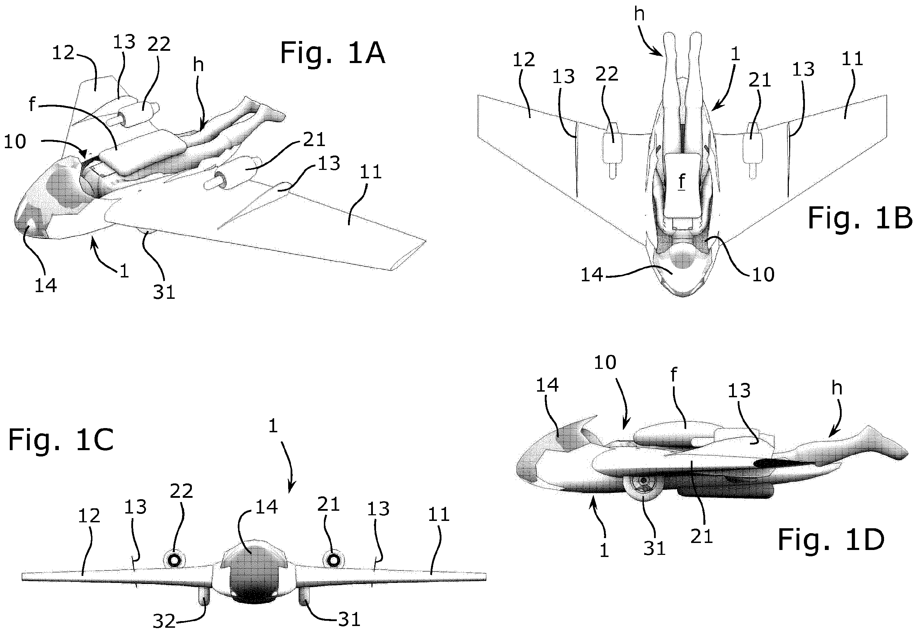

Comme illustré par les figures 1A à 1D, ce drone est constitué lui-même d'un autre aéronef de plus petites dimensions comprenant, notamment, un fuselage 1 équipé de moyens de portance tels que des ailes latérales 11, 12 éventuellement repliables et d'un ou plusieurs empennages 13, d'une motorisation constituée, de préférence, d'au moins un organe de propulsion 2, d'instruments de navigation autonomes (non représentés) et de moyens porteurs d'une cargaison et/ou d'un parachutiste (combattant ou simple parachutiste).

Dans le mode de réalisation des figures 1A-1D, l'organe de propulsion 2 est constitué de deux turboréacteurs 21, 22 assurant une poussée de l'ordre de 40 à 160 kg pour un drone dont la masse totale déployée est inférieure à 500 kg avec une capacité d'emport de charge utile de 100 à 250 kg.

Un compartiment 10 est ménagé sous forme d'une cavité intégrée dans la partie supérieure du fuselage 1 du drone pour accueillir un occupant h en position allongée ventrale, la tête dirigée vers l'avant du fuselage 1. Le compartiment 10 est doté, à l'avant, d'un pare-brise 14 créant une bulle de protection par effet aérodynamique. Le compartiment est ouvert sur le dessus et de préférence vers l'arrière. Suivant les dimensions du compartiment et du parachutiste, il peut être prévu qu'une partie au moins des jambes de ce dernier dépasse à l'arrière du fuselage, comme illustré sur les figures 1A-1D.

De manière remarquable, le fuselage 1 est dépourvu de queue. Les turboréacteurs 21, 22 sont disposés latéralement à l'extérieur et de part et d'autre d'une partie médiane du fuselage 1 où se trouve le compartiment 10.

Le cas échéant, en fonction de l'emploi envisagé pour le drone et du rayon d'action nécessaire à sa mission, le mode de propulsion pourrait être modifié et adapté spécifiquement à cette mission.

Le fuselage 1 peut être pourvu, comme illustré par les figures 1C et 1D, de moyens de support tels qu'un train de roues 31, 32 fixes ou escamotables pour permettre un éventuel atterrissage.

Selon une caractéristique non représentée, le fuselage est équipé d'une interface mécanique de guidage et de translation susceptible de coopérer, par exemple, avec une rampe (ou des rails) fixée sur le plancher de la soute de l'aéronef de transport T et se prolongeant jusqu'à son issue axiale qui en position horizontale (après ouverture commandée) débouche à l'air libre dans l'espace aérien.

Comme représenté sur la figure 2 (étape A), le drone est d'abord embarqué, sur la base de départ, dans la carlingue du cargo civil ou de l'aéronef militaire de transport logistique ou tactique T.

Pour des raisons réglementaires de sécurité, le plein en carburant du drone est effectué avant son chargement dans l'aéronef de transport.La capacité de son réservoir assure au drone un rayon d'action d'environ 200 km.

L'aéronef de transport tactique T (par exemple, du type C130 Hercules, Antonov ou A400M) qui possède généralement un grand rayon d'action (d'au moins 5000 km) a ensuite pour mission de rapprocher le drone du théâtre d'opérations en volant, de préférence, à haute altitude (4000 à 11 000 m).

Si la capacité de l'aéronef de transport le permet, plusieurs drones peuvent être embarqués par l'issue axiale et arrimés de façon alignée dans la soute de l'aéronef T.

Pendant le convoyage, le drone est ensuite préparé pour son intervention.

À cette fin et si cela n'a pas déjà été fait à terre, le parachutiste h (opérateur, combattant, ....) avec son éventuel fardeau f et/ou la charge utile (équipement ou matériel) destinée à être parachutée sur la zone d'opérations X (figure 2) est embarquée, avec son équipement (casque, combinaison, parachute, éventuellement armement,...), en position allongée ventrale dans le compartiment 10 ménagé sous forme d'une cavité intégrée dans la partie supérieure du fuselage 1 du drone (figures 1A et 1B).

Le cas échéant, le drone est équipé d'une installation d'oxygénation (non représentée) permettant de réaliser des missions humaines à haute altitude.

Selon une variante non représentée, le drone peut être, en outre, muni d'une soute intégrée dans la partie inférieure du fuselage et obturée à sa partie inférieure par un jeu de volets mobiles (basculants ou coulissants). Le chargement est alors effectué avant l'embarquement du drone dans l'aéronef de transport.

Selon une autre variante non représentée, le compartiment 10 sera avantageusement équipé de moyens appropriés pour assurer la protection du parachutiste contre les chocs et son alimentation en oxygène et tout autre moyen permettant à un homme de voyager à haute altitude, dans des conditions optimales de température et de confort en étant équipé d'une combinaison ou d'un vêtement de protection, pour optimiser son intégrité physiologique.

Le parachutiste h équipé de l'ensemble de ses équipements embarque dans le drone dans la phase précédant le largage et, de préférence, selon une chronologie de procédures inhérentes à l'aéronef et à l'altitude de largage.

Une fois le drone paré pour sa mission, l'aéronef de transport se positionne en configuration de largage (stabilisation de sa trajectoire, altitude et vitesse de vol avec assiette positive).

L'issue axiale de l'aéronef T est ensuite ouverte à l'altitude de largage déterminée (4 000 m - 11 000 m).

Les moyens d'arrimage (sangles,..., non représentés) qui immobilisaient le drone à bord de l'aéronef de transport conformément aux normes en vigueur, sont alors libérés, ce qui permet d'engager la phase de translation, de guidage et d'orientation du drone (nez du drone pointant vers l'avant de l'appareil) de façon optimale avant sa sortie de l'aéronef de transport et de garantir ainsi une phase de largage sans risque d'interférence avec l'aéronef conformément à l'axe de largage prévu.

Éventuellement, le guidage et la sortie du drone depuis la soute de l'aéronef de transport sont effectués en étant assistés par des moyens de poussée ou d'éjection compatibles avec les procédures, les équipements et l'utilisation de l'aéronef.

Le mode d'aérolargage envisagé permet le largage séquentiel de plusieurs drones de l'invention préconditionnés et arrimés à l'intérieur de l'aéronef de transport.

Dès la sortie de l'aéronef, après franchissement de l'issue axiale, le drone entame une phase de chute gravitaire (figure 2 étape B) qui est critique car il évolue alors dans la zone des turbulences générées par l'aéronef de transport.

À l'issue de cette phase, le drone se stabilise et se place automatiquement sur une trajectoire de vol dite de « plané » s'appuyant sur les qualités de finesse de l'appareil sans activation de la motorisation. La phase de plané sera optimisée pour obtenir un rayon d'action maximal sans propulsion. Sa durée sera fonction des conditions de l'environnement aéronautique (essentiellement altitude et vitesse dans la masse d'air).

L'activation automatique des moyens d'allumage de l'organe de propulsion 2 est effectuée à une altitude et une vitesse prédéterminées compatibles avec le bon fonctionnement des moteurs (figure 2 étape C).

L'altitude de croisière du drone sera choisie de manière à assurer sa discrétion acoustique et sa protection vis-à-vis d'une éventuelle interception par des armes automatiques depuis le sol.

Le drone de l'invention est donc complètement autonome et capable d'assurer le pilotage automatique de son propre vol en direction de l'objectif avec un rayon d'action d'environ 200 km suivant le profil de vol et la charge utile embarquée

À cet effet, le drone dispose d'une avionique programmable nécessaire à son pilotage automatique, sa localisation et sa stabilisation. Cette avionique comprend notamment un calculateur de bord, des capteurs et senseurs traditionnels ainsi que des moyens de positionnement, par exemple, satellitaires (GPS) ou gyroscopiques.

Les paramètres du vol et la position de l'objectif ont été programmés et enregistrés dans l'avionique avant l'embarquement dans l'aéronef de transport et, en cas de nécessités opérationnelles, peuvent être modifiés lors de la phase du vol d'approche précédant le largage du drone.

Le cas échéant, pour des mesures de sécurité, il est possible de prévoir que le parachutiste (combattant,...) embarqué à bord du drone puisse prendre le contrôle lors d'une phase d'évitement (autorité à partir d'un manche de pilotage) ou modifier les paramètres de la mission initiale en activant des paramètres de secours préprogrammés (changement d'objectif, retour anticipé du drone,...).

Lorsque le drone atteint la position et l'altitude prévues et enregistrées initialement pour effectuer le largage de la cargaison k et/ou du parachutiste h, l'avionique commande une réduction significative de la vitesse et une rotation du drone pour passer en situation de vol sur le « dos » (manoeuvre par demi-tonneau ou « Himmelmann »). Conjointement à cette opération, l'avionique déclenche le désarrimage automatique des points d'accrochage de la charge utile positionnée au sein du drone et, en l'absence d'un parachutiste, dans le compartiment 10.

Avec la variante dans laquelle le drone est pourvu d'une soute inférieure, lorsque le drone atteint la position prévue initialement pour effectuer le largage de la cargaison k (charge utile,...), l'avionique du drone commande l'ouverture des volets de la soute (figure 2 étape D).

Le colis k peut être ainsi lui-même largué au-dessus de la zone X au sol avec ou sans parachute.

Le parachutiste h est de préférence maintenu durant le vol en position ventrale par des sangles de maintien. Des moyens de désarrimage sont activés de façon automatique pour libérer les sangles de maintien, de préférence avant que le drone se retourne pour passer en position de vol sur le dos comme illustré sur la figure 2, ce qui permet le largage en chute libre du parachutiste sous le fuselage au point de largage prévu (figure 2 étape E), le parachutiste poursuivant sa mission en rejoignant la zone Z au sol au moyen de son parachute. L'éjection gravitaire sécurisée du parachutiste h est rendue possible notamment par l'absence de queue et par le positionnement du ou des turboréacteurs 21, 22 latéralement de part et d'autre et à l'extérieur de la partie médiane du fuselage 1 où se trouve le compartiment 10, ce qui permet d'éviter tout risque d'interférence entre le parachutiste h et le drone au moment de leur séparation en début de chute libre. Le parachutiste h dispose également d'un mode « secours » permettant de se désarrimer manuellement (en cas de problème en vol), avant le retournement du drone sur le dos.

Une fois le largage effectué, le drone entame sa procédure de retour vers une zone préprogrammée (figure 2 étape F).

Si le drone est équipé d'un train d'atterrissage, comme dans le mode de réalisation illustré par les figures 1A-1D, il peut alors revenir se poser sur une piste prévue à cet effet.

Sinon, le fuselage 1 du drone est équipé d'un parachute de récupération mis en oeuvre lors de la phase finale du trajet retour après arrêt de la motorisation, le drone étant positionné à l'altitude prévue au-dessus de la zone d'atterrissage programmée. Il peut être alors récupéré par des équipes au sol ou en mer (figure 2 étape G) et, dans ce dernier cas, il est prévu d'équiper, au préalable, le fuselage du drone de boudins gonflables pour assurer sa flottabilité après l'amerrissage et avant sa récupération par des navires dédiés.

Une fois récupéré, le drone de l'invention peut être aisément reconditionné pour une nouvelle mission.

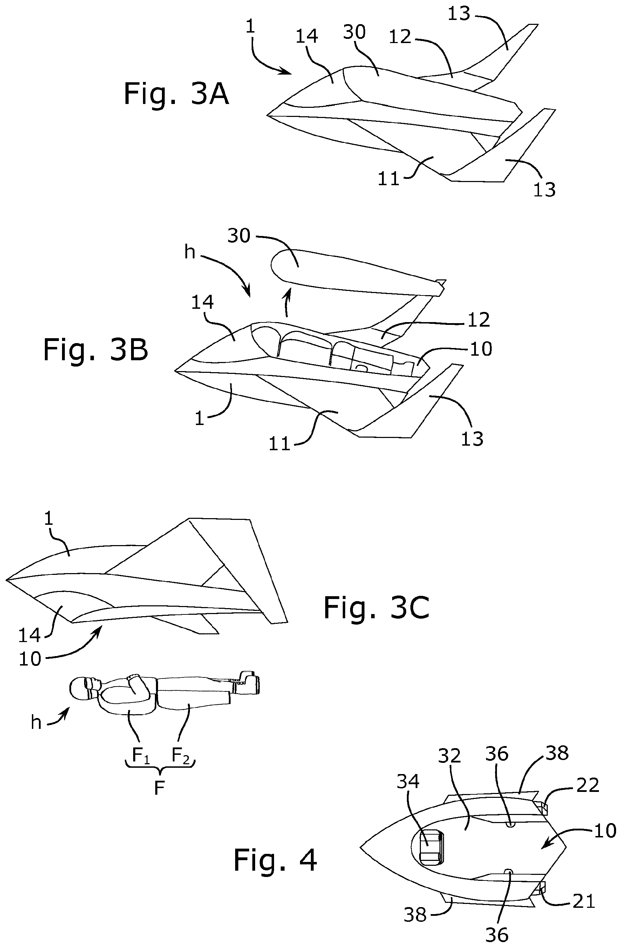

Sur les figures 3A à 3C ont été illustrées différentes phases de vol d'un drone selon un deuxième mode de réalisation de l'invention, qui se distingue du précédent notamment par la présence d'un capot de protection 30 du compartiment 10 recevant le parachutiste h, et par la taille de ce compartiment 10, suffisante pour accueillir le parachutiste h sans que ses jambes dépassent à l'extérieur. Le compartiment 10, illustré en détail sur la figure 4, comporte un fond 32 relativement plat sur lequel le parachutiste peut s'allonger sur le ventre, sans que ses pieds dépassent à l'extérieur, et un support rehausseur 34 en saillie vers le haut par rapport à ce fond 32, pour assurer au parachutiste une position confortable à plat ventre avec les avant-bras repliés et le haut du corps partiellement redressé, lui permettant le cas échéant d'accéder à un tableau de commande pour effectuer certaines manoeuvres (par exemple: une prise de contrôle lors d'une phase d'évitement, une modification des paramètres de la mission initiale ou une activation de paramètres de secours préprogrammés, comme un changement d'objectif ou un retour anticipé du drone, ou bien le déclenchement de la manoeuvre de largage, et notamment de la phase de retournement sur le dos). Les parois latérales du compartiment 10 sont par ailleurs équipées de rebords formant des surfaces d'appui 36 pour une charge postérieure f2 faisant partie du fardeau f du parachutiste h, et située au niveau du bas du corps, notamment de la face postérieure des jambes. Durant le vol, la charge postérieure est sanglée au parachutiste h, mais supportée au moins partiellement par les surfaces d'appui 36, de manière à soulager le parachutiste de tout ou partie du poids de la charge postérieure f2. Des dispositions analogues peuvent être prises pour supporter latéralement le sac dorsal f1 comportant le parachute du parachutiste pendant le vol.

Le drone est propulsé par un organe de propulsion constitué de deux turboréacteurs 21, 22 placés sous les ailes latérales 11, 12. On distingue également sur la figure 4, dans laquelle les ailes 11, 15 ont volontairement été omises, des glissières 38 constituant des moyens de support et de guidage du drone dans l'aéronef de transport T, et notamment au moment de son largage illustré sur la figure 2B.

En configuration de vol, le parachutiste h est allongé sur le ventre et le cas échéant arrimé à l'intérieur du compartiment par des moyens d'arrimage, en pratique des sangles ou des joncs plastifiés. Le compartiment fermé par le capot comme illustré sur la figure 3A. Lorsque le drone atteint une zone géographique préprogrammée, qui de préférence est située à quelque distance de l'objectif, le capot est automatiquement déverrouillé et largué, comme illustré sur la figure 3B. Le drone poursuit sa trajectoire jusqu'à la zone de l'objectif. Au point de largage, le parachutiste h valide son propre désarrimage, qui est effectué par exemple par un couteau manoeuvré par pyrotechnie coupant les moyens d'arrimage. Une fois que le désarrimage du parachutiste h est vérifié par le parachutiste, celui-ci valide la manoeuvre de retournement et de largage proprement dit, illustrée sur la figure 3C. L'occupant quitte le compartiment en chute libre. Tout risque de collision avec le drone est écarté, dans la mesure où aucune partie du drone, dans la partie du drone située derrière le compartiment, ne fait saillie dans la zone où se trouve le parachutiste amorçant sa chute hors du compartiment. En particulier, le drone ne comporte dans cette zone ni queue, ni organe de propulsion.

Naturellement, diverses variantes sont possibles. Il est notamment possible de combiner des caractéristiques décrites dans différents modes de réalisation.

Le largage peut être automatiquement déclenché par tout moyen approprié, notamment par système barométrique ou chrono-barométrique.

On peut également envisager que le drone soit apte à décoller depuis une piste.

## Revendications

1. Drone comprenant un fuselage (1) équipé de moyens de portance (11, 12) apte à permettre une position de vol sur le ventre et une position de vol sur le dos, d'au moins un organe de propulsion (2), d'instruments de navigation autonomes et d'un compartiment axial (10) formant une cavité intégrée dans une partie supérieure du fuselage pour embarquer un parachutiste (h) en position allongée sur le ventre, une avionique pourvue de moyens de pilotage programmables couplés aux instruments de navigation autonomes, **caractérisé par** des moyens de largage dudit parachutiste commandés par ladite avionique et en ce que le drone est apte et destiné à assurer un largage dudit parachutiste en position de vol sur le dos, l'avionique comportant des moyens pour commander une procédure de retournement du drone en position de vol sur le dos et de maintien de la position de vol sur le dos jusqu'à achèvement du largage du parachutiste.

2. Drone selon la revendication 1, **caractérisé en ce que** l'avionique comporte une interface homme-machine de déclenchement pour permettre au parachutiste de déclencher la procédure de retournement.

3. Drone selon l'une quelconque des revendications précédentes, **caractérisé en ce que** le compartiment axial comporte un fond pour accueillir le parachutiste en position allongée sur le ventre et un support rehausseur faisant en saillie par rapport au fond pour assurer un support de la tête et/ou de la partie supérieure du buste du parachutiste (h) en position allongée sur le ventre.

4. Drone selon l'une quelconque des revendications précédentes, **caractérisé en ce qu'**il comporte des sangles ou joncs de maintien du parachutiste (h) en position ventrale allongée, et des moyens de désarrimage automatique des sangles ou joncs de maintien, de préférence lorsque le drone est en position de vol sur le ventre.

5. Drone selon l'une des revendications précédentes, caractérisé en ce l'organe de propulsion (2) comporte deux turboréacteurs (21, 22) situés latéralement à l'extérieur et de part et d'autre d'une portion médiane du fuselage (1) dans laquelle se trouve le compartiment axial (10).

6. Drone selon l'une quelconque des revendications précédentes, **caractérisé en ce que** le fuselage est dépourvu de queue faisant saillie de la partie supérieure du fuselage vers le haut, par référence à la position de vol sur le ventre.

7. Drone selon l'une quelconque des revendications 1 à 6, **caractérisé en ce que** le compartiment axial est ouvert.

8. Drone selon l'une quelconque des revendications 1 à 6, **caractérisé en ce que** le compartiment axial est fermé par un capot largable en position de vol sur le ventre.

9. Drone selon l'une des revendications précédentes, **caractérisé en ce que** le fuselage (1) comporte un pare-brise (13) avant.

10. Drone selon l'une des revendications précédentes, **caractérisé en ce qu'**il comporte en outre des moyens porteurs d'une charge utile embarquée (k), et des moyens de largage de ladite charge utile embarquée (k) commandés par ladite avionique.

11. Drone selon la revendication 10, **caractérisé en ce que** les moyens porteurs de la charge utile embarquée (k) comprennent une soute obturée en partie basse par au moins un volet mobile, ledit compartiment (10) étant situé au-dessus de ladite soute, permettant un largage de la charge utile embarquée en position de vol sur le ventre.

12. Drone selon la revendication 10, **caractérisé en ce que** les moyens porteurs de la charge utile embarquée (k) sont situés, lorsque le drone est en position de vol sur le ventre, dans une partie haute de la cavité intégrée dans une partie supérieure du fuselage pour embarquer ledit parachutiste (h) en position allongée, un volume étant préservé dans la cavité pour loger au moins une portion du corps du parachutiste sous les moyens porteurs.

13. Drone selon l'une quelconque des revendications précédentes, **caractérisé en ce que** lesdits moyens de pilotage programmables comprennent un calculateur de bord associé à des logiciels et coopérant avec lesdits instruments de navigation autonomes.

14. Drone selon l'une des revendications précédentes, **caractérisé en ce que** lesdits instruments de navigation autonomes comprennent des moyens de positionnement satellitaires du type GPS.

15. Drone selon l'une quelconque des revendications précédentes, **caractérisé en ce que** le drone est aérolargable à partir d'un aéronef de transport (T), et comporte des moyens de support du fuselage (1) permettant sa séparation contrôlée depuis l'aéronef de transport (T) dans l'espace aérien, des moyens d'allumage automatique de l'organe de propulsion (2) lors de la chute gravitationnelle du fuselage (1).

16. Drone selon la revendication 15, **caractérisé en ce que** lesdits moyens de support comprennent un train d'atterrissage disposant de roues (11, 12).

17. Équipement d'intervention aéroportée comprenant un aéronef de transport (T) comportant une carlingue pourvue d'une issue arrière **caractérisé en ce qu'**il comporte en outre un drone selon l'une quelconque des revendications 15 à 16 susceptible d'être embarqué dans la carlingue dudit aéronef, l'issue arrière étant équipée d'une rampe de guidage coopérant avec lesdits moyens de support du drone permettant sa séparation contrôlée depuis l'aéronef dans l'espace aérien.

## Patentansprüche

1. Drohne bestehend aus einem Rumpf (1) mit Auftriebsmitteln (11, 12), die eine Flugposition in Bauchlage und eine Flugposition in Rückenlage ermöglichen, mindestens einem Antriebselement (2), autonomen Navigationsinstrumenten und einem axialen Abteil (10), welches eine in einen oberen Teil des Rumpfes integrierten Hohlraum zur Aufnahme eines auf dem Bauch liegenden Fallschirmspringers (h) bildet, einer Avionik mit programmierbaren Steuermitteln, welche an die autonomen Navigationsinstrumente gekoppelt sind, **dadurch gekennzeichnet, dass** Abwurfmittel des besagten Fallschirmspringers über besagte Avionik gesteuert werden und dadurch, dass die Drohne in der Lage ist, den besagten Fallschirmspringer in Rückenlage fliegend abzuwerfen, wobei die Avionik Mittel zur Steuerung des Umdrehens der Drohne während des Flugs in die Rückenlage sowie zur Aufrechterhaltung der Flugposition in Rückenlage umfasst, bis der Fallschirmspringer vollständig abgeworfen wurde.

2. Drohne nach Anspruch 1, **dadurch gekennzeichnet, dass** die Avionik eine Mensch-Maschine-Auslöseschnittstelle umfasst, mit welcher der Fallschirmspringer das Umdrehen auslösen kann.

3. Drohne nach einem der vorhergehenden Ansprüche, **dadurch gekennzeichnet, dass** das axiale Abteil einen Boden zur Aufnahme des auf dem Bauch liegenden Fallschirmspringers umfasst und einen am Boden vorstehenden Aufsatz zum Abstützen des Kopfes und/oder des oberen Teils des Oberkörpers des auf dem Bauch liegenden Fallschirmspringers (h).

4. Drohne nach einem der vorhergehenden Ansprüche, **dadurch gekennzeichnet, dass** sie Gurte oder Ringe umfasst, die den Fallschirmspringer (h) in Bauchlage halten, und Mittel zum automatischen Abdocken der Haltegurte oder -ringe, vorzugsweise, wenn die Drohne in Bauchlage fliegt.

5. Drohne nach einem der vorhergehenden Ansprüche, **dadurch gekennzeichnet, dass** das Antriebselement (2) zwei Strahltriebwerke (21, 22) seitlich an der Außenseite zu beiden Seiten eines mittleren Rumpfabschnitts (1), in welchem sich das axiale Abteil (10) befindet, umfasst.

6. Drohne nach einem der vorhergehenden Ansprüche, **dadurch gekennzeichnet, dass** der Rumpf kein Heckelement aufweist, das in Bezug auf die Flugposition in Bauchlage über den oberen Rumpfteil herausragt.

7. Drohne nach einem der Ansprüche 1 bis 6, **dadurch gekennzeichnet, dass** das axiale Abteil offen ist.

8. Drohne nach einem der Ansprüche 1 bis 6, **dadurch gekennzeichnet, dass** das axial Abteil durch eine Abdeckung geschlossen ist, die bei einem Flug in Bauchlage abgeworfen werden kann.

9. Drohne nach einem der vorhergehenden Ansprüche, **dadurch gekennzeichnet, dass** der Rumpf (1) eine Frontscheibe (13) aufweist.

10. Drohne nach einem der vorhergehenden Ansprüche, **dadurch gekennzeichnet, dass** sie des Weiteren Mittel zum Tragen einer mitgeführten Nutzlast (k) umfasst, und Mittel zum Abwerfen der besagten mitgeführten Nutzlast (k), die über besagte Avionik gesteuert werden.

11. Drohne nach Anspruch 10, **dadurch gekennzeichnet, dass** die Mittel zum Tragen der mitgeführten Nutzlast (k) einen im unteren Teil durch mindestens eine bewegliche Klappe verschlossenen Frachtraum enthalten, wobei sich das besagte Abteil (10) oberhalb des besagten Frachtraums befindet, sodass die mitgeführte Nutzlast während des Fluges in Bauchlage abgeworfen werden kann.

12. Drohne nach Anspruch 10, **dadurch gekennzeichnet dass** sich die Mittel zum Tragen der mitgeführten Nutzlast (K), wenn die Drohne in Bauchlage fliegt, in einem oberen Teil des Hohlraums befinden, der in einem oberen Teil des Rumpfes zur Aufnahme besagten Fallschirmspringers (h) in liegender Position integriert ist, wobei im Hohlraum ein Volumen dafür vorgesehen ist, mindestens einen Abschnitt des Körpers des Fallschirmspringers unterhalb der Tragmittel aufzunehmen.

13. Drohne nach einem der vorhergehenden Ansprüche, **dadurch gekennzeichnet, dass** besagte programmierbare Steuermittel einen Bordrechner mit zugehöriger Software umfassen, der mit besagten autonomen Navigationsinstrumenten zusammenwirkt.

14. Drohne nach einem der vorhergehenden Ansprüche, **dadurch gekennzeichnet, dass** besagte autonome Navigationsinstrumente Mittel zur Positionsbestimmung per Satellit vom Typ GPS umfassen.

15. Drohne nach einem der vorhergehenden Ansprüche, **dadurch gekennzeichnet, dass** die Drohne von einem Transportluftfahrzeug (T) in die Luft abgeworfen werden kann und sie Stützmittel für den Rumpf (1) aufweist, die die gesteuerte Trennung vom Transportluftfahrzeug (T) aus in die Luft ermöglichen sowie automatische Mittel zum Zünden des Antriebselements (2) während des Gravitationsflugs des Rumpfs (1).

16. Drohne nach Anspruch 15, **dadurch gekennzeichnet, dass** besagte Stützmittel ein Fahrwerk mit Rädern (11,12) umfassen.

17. Luftgestütztes Absetzsystem bestehend aus einem Transportluftfahrzeug (T) mit Kabine, das einen hinteren Ausgang aufweist, **dadurch gekennzeichnet, dass** das System des Weiteren eine Drohne nach einem der Ansprüche 15 bis 16 umfasst, die in der Kabine des besagten Luftfahrzeugs an Bord mitgeführt werden kann, wobei der hintere Ausgang mit einer Führungsrampe ausgestattet ist, die mit besagten Stützmitteln der Drohne zusammenwirkt und deren kontrolliertes Abtrennen vom Luftfahrzeug im Luftraum ermöglicht.

## Claims

1. Drone comprising a fuselage (1) equipped with means of lift (11, 12) capable of allowing a belly-to-ground flight position and an inverted flight position, at least one propulsion unit (2), autonomous navigation instruments and an axial compartment (10) forming a recess incorporated in an upper part of the fuselage in order to receive a parachutist (h) in a prone position, avionics provided with programmable control means coupled to the autonomous navigation instruments **characterised by** having means of dropping said parachutist controlled by said avionics, and in that the drone is designed and intended to ensure release of said parachutist in the inverted flight position, wherein the avionics comprise means of controlling a procedure for rolling the drone into the inverted flight position and for maintaining the inverted flight position until release of the parachutist has been completed.

2. Drone according to claim 1, **characterised in that** the avionics comprise a human-machine triggering interface allowing the parachutist to initiate the inversion procedure.

3. Drone according to any one of the above claims, **characterised in that** the axial compartment comprises a bottom to accommodate the parachutist in the prone position and a booster support protruding in relation to the bottom to support the parachutist's head and/or upper part of the torso of the parachutist (h) lying in the prone position.

4. Drone according to any one of the above claims, **characterised in that** it comprises straps or rods for maintaining the parachutist (h) lying in the prone position and means of automatically undocking the retaining straps or rods, preferably when the drone is in belly-to-ground flight position.

5. Drone according to any of the above claims, **characterised in that** the propulsion unit (2) comprises two turbojets (21, 22) positioned laterally on the outside and on either side of a median portion of the fuselage (1) in which the axial compartment (10) is located.

6. Drone according to any one of the above claims, **characterised in that** the fuselage is devoid of a tail fin projecting upwards from the upper part of the fuselage in relation to the belly-to-ground flight position.

7. Drone according to any one of claims 1 to 6, **characterised in that** the axial compartment is open.

8. Drone according to any one of claims 1 to 6, **characterised in that** the axial compartment is closed by a cover releasable in belly-to-ground flight position.

9. Drone according to one of the above claims, **characterised in that** the fuselage (1) comprises a front windshield (13).

10. Drone according to one of the above claims, **characterised in that** it furthermore comprises means for carrying an onboard payload (k) and means of releasing said onboard payload (k) controlled by said avionics.

11. Drone according to claim 10, **characterised in that** the means for carrying the onboard payload (k) comprise a hold closed off at the bottom by at least one movable flap, wherein said compartment (10) is situated above said hold, allowing release of the onboard payload in belly-to-ground flight position.

12. Drone according to claim 10, **characterised in that** the means of carrying the onboard payload (k) are situated, when the drone is in belly-to-ground flight position, in a top part of the cavity integrated in an upper part of the fuselage for carrying on board said parachutist (h) in the prone position, wherein a volume is retained in the cavity to accommodate at least a portion of the parachutist's body under the means of carrying.

13. Drone according to any of the above claims, **characterised in that** said programmable control means comprise an onboard computer associated with software and interacting with the autonomous navigation instruments.

14. Drone according to any of the above claims, **characterised in that** said autonomous navigation instruments comprise GPS-type satellite positioning means.

15. Drone according to any one of the above claims, **characterised in that** the drone is air-droppable from a transport aircraft (T) and comprises means for supporting the fuselage (1) allowing its controlled separation from the transport aircraft (T) in the airspace and means of automatic ignition of the propulsion unit (2) during gravitational fall of the fuselage (1).

16. Drone according to claim 15, **characterised in that** said support means comprise an undercarriage having wheels (11, 12).

17. Airborne intervention equipment comprising a transport aircraft (T) including a cabin provided with a rear exit, **characterised in that** it furthermore comprises a drone according to any one of claims 13 to 15 capable of being loaded into the cabin of said aircraft, wherein the rear exit is equipped with a guidance ramp interacting with said support means of the drone, allowing its controlled separation from the aircraft in the airspace.
